# FASCICULE DE BREVET EUROPEEN

(11) **EP 2 012 056 B1**
(45) Date de publication et mention de la délivrance du brevet: **29.10.2014**
(21) Numéro de dépôt: 08159066.3
(22) Date de dépôt: 26.06.2008
(51) Int. Cl.: B60Q 1/26, F21V 5/04, F21V 8/00, F21S 8/10

(54) **Dispositif lumineux de signalisation pour véhicule automobile**
Beleuchtungsvorrichtung zur Signalisation für Kraftfahrzeuge
Luminous signalling device for an automobile

(30) Priorité: 02.07.2007 FR 0704769
(43) Date de publication de la demande: 07.01.2009
(73) Titulaire: VALEO VISION, 93012 Bobigny (FR)
(72) Inventeur: Gasquet, Jean-Claude, 89100 Saint Clement (FR); Gomez Ruiz, Carlos, 23600 Martos (ES); Kulig, Christian, 93346 Ihrlerstein (DE); Moisy, Eric, 23009 Jaen (ES); Reiss, Benoît, 95600, Eaubonne (FR)

(56) Documents cités:
- EP-A- 1 746 339
- US-A1- 2005 152 141

## Description

L'invention se rapporte à un dispositif lumineux de signalisation pour un véhicule automobile.

L'invention se rapporte plus particulièrement à un dispositif lumineux de signalisation pour un véhicule automobile comportant au moins une première source lumineuse arrière et une deuxième source lumineuse arrière qui sont susceptibles d'être activées en alternance et dont chacune est susceptible de former un faisceau lumineux longitudinal de signalisation.

Les véhicules automobiles sont généralement équipés de plusieurs dispositifs lumineux de signalisation dont chacun est susceptible d'émettre un faisceau de signalisation associé remplissant une fonction particulière.

Ainsi, on peut par exemple citer les feux indicateurs de direction, aussi appelés "clignotants", qui sont agencés à l'avant et à l'arrière transversalement de part et d'autre du véhicule automobile. Ces feux indicateurs de direction émettent un faisceau lumineux clignotant de couleur ambrée du côté duquel le conducteur du véhicule souhaite tourner.

On connaît aussi les feux de stop qui sont agencés à l'arrière du véhicule et qui émettent un faisceau lumineux de couleur rouge lorsque les freins du véhicule automobile sont actionnés.

On peut encore citer les feux de jours, aussi connus sous la dénomination anglo-saxonne "Days Running Lights", qui sont agencés à l'avant du véhicule et qui sont allumés le jour pour signaler la position du véhicule automobile.

La conception des véhicules automobiles évolue de telle manière que les dispositifs de signalisation sont de plus en plus nombreux, et que l'espace accordé à chacun d'eux est de plus en plus restreint.

Par ailleurs, les normes en vigueur dans certains pays donnent la possibilité aux concepteurs de feux de stop d'augmenter temporairement l'intensité du faisceau de signalisation de freinage, par exemple lorsque le véhicule automobile effectue un freinage d'urgence.

A cet effet, il est connu d'équiper les feux de stop avec des sources lumineuses, telles que des diodes, commandées en intensité de manière à émettre un faisceau lumineux de freinage ayant une intensité lumineuse d'urgence supérieure à l'intensité lumineuse normale.

Cependant, un tel dispositif est onéreux à réaliser car l'augmentation d'intensité lumineuse au-delà de l'intensité lumineuse normale s'accompagne généralement d'une augmentation des contraintes thermiques et d'une diminution de la durée de vie des diodes et/ou d'une augmentation du nombre de diodes. De plus, un tel dispositif est très encombrant.

On connaît du document EP 1 746 339 un dispositif d'éclairage ou de signalisation, notamment pour véhicule automobile, comportant au moins une source lumineuse et au moins un système optique de sortie pour la formation d'un faisceau lumineux d'éclairage ou de signalisation réglementaire, qui comporte au moins un système optique d'entrée comprenant un élément de collimation recevant des rayons lumineux émis par la source et transmettant un faisceau de rayons parallèles vers un système optique de sortie de formation d'un faisceau lumineux d'éclairage ou de signalisation.

On connaît également du document US 7 134 768 un dispositif de signalisation dans lequel la lumière émise par une pluralité de LEDs est introduite dans un guide de lumière et réfléchie vers l'intérieur par réflexion pour former un faisceau sensiblement parallèle qui peut alors être réfléchi par réflexion totale sur une deuxième surface de réflexion et une troisième surface. La lumière peut alors être conduite hors du guide de lumière et émise dans une direction d'éclairage du dispositif. Ce dispositif permet de combiner plusieurs sources lumineuses, éventuellement de couleurs différentes, dans un seul faisceau lumineux.

Pour résoudre notamment ces problèmes, l'invention propose un dispositif lumineux de signalisation pour un véhicule automobile comportant au moins une première source lumineuse et une deuxième source lumineuse, notamment susceptibles d'être activées en alternance ou ensemble, et dont chacune est susceptible de former un faisceau lumineux de signalisation dirigé vers l'avant, qui comporte des moyens pour former un premier et un deuxième faisceaux intermédiaires qui sont issus respectivement de la première et de la deuxième sources lumineuses et qui sont dirigés en direction d'une surface commune de sortie d'une face transversale de réfraction comportant une suite de prismes dont chaque première face réfracte le premier faisceau intermédiaire pour former un premier faisceau de signalisation, et chaque seconde face réfracte le second faisceau intermédiaire pour former un second faisceau de signalisation

Selon l'invention, le dispositif comporte un deuxième écran transversal de dispersion qui est agencé en avant de la face de réfraction et qui est conformé de manière à modifier la photométrie du faisceau lumineux de signalisation.

Avantageusement, l'invention concerne un dispositif lumineux de signalisation, notamment de ce type, qui comporte des moyens pour former un premier et un deuxième faisceaux intermédiaires parallèles qui sont issus respectivement de la première et de la deuxième sources lumineuses et qui sont inclinés par rapport à la direction longitudinale en direction d'une surface commune de sortie d'une face transversale de réfraction comportant une alternance de premières facettes et de deuxièmes facettes, les premières facettes étant inclinées de manière à réfracter le premier faisceau intermédiaire pour former le premier faisceau longitudinal de signalisation à travers la surface commune de sortie, et les deuxièmes facettes étant inclinées de manière à réfracter le deuxième faisceau lumineux pour former le deuxième faisceau longitudinal de signalisation à travers la surface commune de sortie.

Selon un mode de réalisation préféré, en effet, les facettes dédiées pour l'une ou l'autre des sources lumineuses, sont regroupées en prismes, chaque prisme délimitant deux facettes. Les prismes sont de préférence contigus. On a ainsi une face de réfraction commune avec des rangées de prismes.

Selon d'autres caractéristiques optionnelles, cumulatives ou alternatives, de l'invention :
- chaque faisceau lumineux intermédiaire est formé par réfraction des rayons lumineux à travers un élément optique comportant une face arrière de collecte agencée en vis-à-vis de la source lumineuse associée ;
- la source lumineuse émet des rayons lumineux selon une direction principale longitudinale dirigée vers l'avant, l'élément optique comportant une pluralité de facettes qui interceptent la totalité des rayons lumineux qui traversent la face de collecte pour former le faisceau lumineux intermédiaire associé ;
- la face de réfraction est portée par un premier écran transversal de sortie qui est interposé au confluent des faisceaux intermédiaires ;
- la face de réfraction est formée par la face avant du premier écran de sortie ;
- chaque faisceau intermédiaire est guidé jusqu'à la face de réfraction par l'intermédiaire d'un guide de lumière associé qui est réalisé venu de matière avec le premier écran de sortie ;
- le deuxième écran de dispersion est réalisé venu de matière avec le premier écran de sortie ;
- les sources lumineuses sont formées par des diodes électroluminescentes ;
- les diodes sont agencées sur une carte transversale commune de manière à émettre des rayons lumineux selon une direction principale longitudinale ;
- les deux sources lumineuses sont susceptibles d'être activées simultanément pour augmenter l'intensité du premier faisceau lumineux de signalisation ;
- au moins une source lumineuse comporte des moyens pour faire varier son intensité lumineuse ;
- chaque source lumineuse émet des rayons lumineux d'une longueur d'onde différente de l'autre source lumineuse ;
- l'intensité de la deuxième source lumineuse est susceptible d'être commandée de manière que lorsque les deux sources lumineuses sont allumées simultanément, le faisceau lumineux de signalisation apparaisse sensiblement de la même couleur que le premier faisceau lumineux de signalisation pour un oeil humain.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en perspective qui représente une pluralité de dispositifs de signalisation qui comportent chacun deux sources lumineuses et qui sont réalisés selon les enseignements de l'invention ;
- la figure 2 est une vue en section selon le plan de coupe 2-2 de la figure 1 qui représente un des dispositifs de la figure 1 et sur laquelle est représenté le trajet des rayons lumineux issus de chacune des sources lumineuses ;
- la figure 3 est une vue en perspective qui représente un deuxième mode de réalisation du dispositif lumineux de signalisation ;
- la figure 4 est une vue en section selon le plan de coupe 4-4 de la figure 3 qui est similaire à la vue de la figure 2 ;
- la figure 5 est une vue en perspective qui représente un dispositif lumineux de signalisation qui est réalisé selon un troisième mode de réalisation de l'invention ;
- la figure 6 est une vue en section selon le plan de coupe 6-6 de la figure 5 qui est similaire à la vue de la figure 2.

Dans la suite de la description, des éléments ayant des fonctions similaires, analogues ou identiques seront désignés par des mêmes numéros de référence.

Dans la suite de la description, on adoptera de manière non limitative une orientation longitudinale dirigée d'arrière en avant, une orientation transversale dirigée de gauche à droite, et une orientation verticale dirigée de bas en haut, qui sont indiquées par les trièdre "L,V,T" des figures.

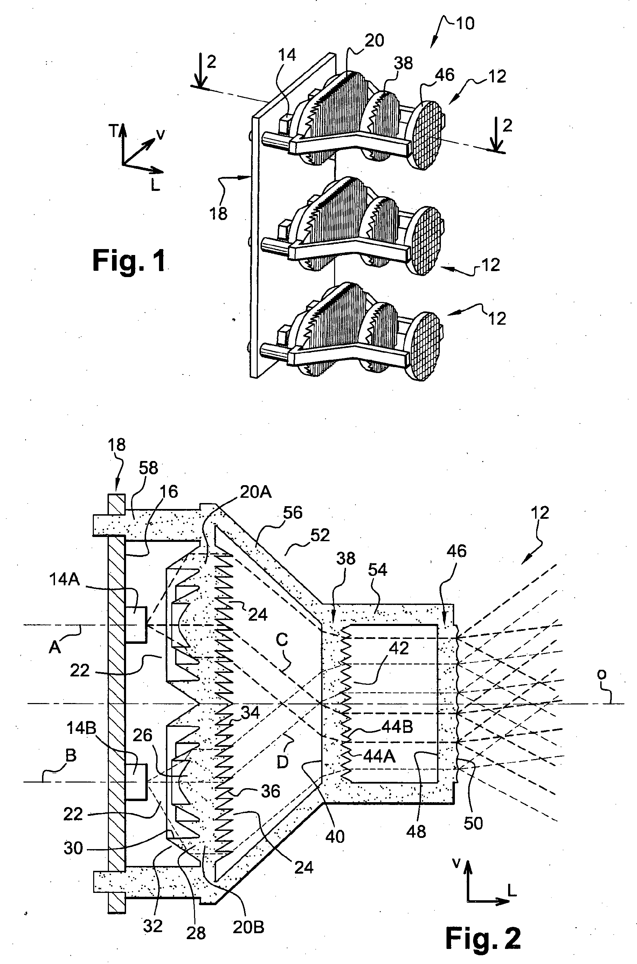

On a représenté à la figure 1 un module optique 10 qui est destiné à former alternativement un premier, un deuxième et un troisième faisceaux globaux lumineux longitudinaux de signalisation dirigés vers l'avant. Ce module optique 10 est plus particulièrement destiné à être agencé sur un véhicule automobile, par exemple à l'arrière.

Dans l'exemple représenté à la figure 1, le module optique 10 comporte trois dispositifs lumineux de signalisation 12 dont chacun est susceptible de former alternativement un premier et un deuxième faisceau lumineux longitudinal partiel de signalisation dirigé vers l'avant selon un axe optique "O" longitudinal commun qui sont émis par une surface commune de sortie. Les trois faisceaux lumineux partiels de signalisation forment conjointement le faisceau lumineux global de signalisation.

On comprendra que, de manière générale, le nombre de dispositifs lumineux de signalisation 12 formant le module optique 10 peut varier entre un et plusieurs en fonction de la forme et des caractéristique photométriques que l'on souhaite obtenir pour le faisceau global de signalisation.

Pour simplifier la compréhension de la suite de la description, les faisceaux lumineux partiels seront simplement appelés faisceaux lumineux de signalisation.

Les trois dispositifs lumineux de signalisation 12 sont d'apparence identique. On n'en décrira donc qu'un seul par la suite.

Comme représenté plus en détail à la figure 2, le dispositif lumineux de signalisation 12 comporte une première source lumineuse 14A supérieure arrière et une deuxième source lumineuse 14B inférieure arrière qui sont alignées verticalement l'une au-dessus de l'autre. Les deux sources lumineuses 14A, 14B sont constituées par deux diodes électroluminescentes dites "de haute puissance" qui sont agencées sur la face avant 16 d'une carte 18 transversale verticale commune à circuits imprimés.

Chaque source lumineuse 14A, 14B est susceptible d'émettre vers l'avant un cône de rayons lumineux d'axe principal d'émission longitudinal associé "A" et "B".

Les deux sources lumineuses 14A, 14B sont plus particulièrement agencées symétriquement par rapport à un plan transversal comprenant l'axe optique "O" du dispositif lumineux de signalisation 12.

Chaque source lumineuse 14A, 14B est commandée entre un état activé et un état désactivé par une unité électronique de commande (non représentée). La première source lumineuse 14A et la deuxième source lumineuse 14B sont ainsi susceptibles d'être activées en alternance pour former respectivement un premier et un deuxième faisceau lumineux de signalisation à travers une surface commune de sortie 42 du dispositif lumineux de signalisation 12.

Dans le mode de réalisation représenté aux figures, chaque source lumineuse émet des rayons lumineux d'une longueur d'onde, c'est-à-dire d'une couleur, différente de l'autre source lumineuse. Ainsi, la première source lumineuse 14A émet des rayons lumineux de couleur rouge de manière que le premier faisceau lumineux de signalisation réalise une fonction de feu de stop, et la deuxième source lumineuse 14B émet des rayons lumineux de couleur ambrée de manière que le deuxième faisceau lumineux de signalisation réalise une fonction d'indicateur de direction.

L'expression « longueur d'onde » désigne ici la « longueur d'onde unique » si la source lumineuse est une source lumineuse monochromatique, ou la « longueur d'onde moyenne » si la source lumineuse émet un faisceau comportant une pluralité de longueurs d'ondes différentes, de sorte que l'expression « longueur d'onde » est ici associée à la couleur perçue de la source lumineuse.

La source lumineuse est en effet à comprendre comme une source unique ou un regroupement de sources, notamment quand le type de source est une diode électroluminescente.

Pour la suite de la description, et à titre d'exemple, le premier faisceau lumineux de signalisation sera appelé faisceau lumineux de freinage et le deuxième faisceau lumineux de signalisation sera appelé faisceau lumineux de direction.

Comme cela sera expliqué par la suite, l'unité électronique de commande est apte à faire varier l'intensité lumineuse au moins de la deuxième source lumineuse 14B ambrée.

Le dispositif 12 comporte aussi un premier élément optique 20A et un deuxième élément optique 20B qui sont respectivement agencés longitudinalement en avant et à distance de la première source lumineuse 14A et de la deuxième source lumineuse 14B.

Les éléments optiques 20A, 20B sont réalisés en un matériau transparent présentant un indice de réfraction différent de celui de l'air.

Avantageusement, les éléments optiques 20A, 20B sont réalisés en une seule pièce venue de matière par exemple en un matériau plastique transparent.

Les deux éléments optiques 20A, 20B sont ici d'apparence identique par symétrie par rapport à un plan transversal comprenant par l'axe optique "O". La description suivante d'un des éléments optiques 20A, 20B sera donc applicable à l'autre.

L'élément optique 20 comporte une première face 22 transversale verticale arrière de collecte qui est agencée en vis-à-vis de la source lumineuse 14 associée, et une deuxième face 24 opposée avant de déviation.

La première face de collecte 22 est conformée de manière à paralléliser tous les rayons lumineux du cône émis par la source lumineuse associée 14 entrants à l'intérieur de l'élément optique 20 pour former un unique pinceau lumineux associé d'axe "A", "B" dirigé vers l'avant.

Ainsi, la première face de collecte 22 comporte une zone centrale convexe 26 de forme paraboloïde qui est coaxiale à l'axe "A", "B" de la source lumineuse associée 14. Ainsi, les rayons lumineux incidents sont déviés par réfraction de manière que les rayons lumineux réfractés soient orientés longitudinalement.

La première face de collecte 22 comporte aussi trois nervures 28 annulaires concentriques qui entourent la zone centrale et qui s'étendent longitudinalement vers l'arrière.

Chaque nervure 28 comporte un versant interne 30 et un versant externe 32 qui se rejoignent longitudinalement vers l'arrière en une crête circulaire aiguë. Le versant interne 30 est orienté de manière sensiblement perpendiculaire aux rayons lumineux incidents afin que les rayons lumineux incidents du cône lumineux associé ne soient sensiblement pas déviés lorsqu'ils pénètrent à l'intérieur de l'élément optique 20. Le versant interne 30 des nervures 28 permet ainsi de collecter les rayons lumineux à la périphérie du cône émis par la source 14 associée.

Le versant externe 32 est orienté de manière que lesdits rayons lumineux incidents non déviés soient réfléchis par réflexion totale longitudinalement vers l'avant pour participer à la formation du pinceau lumineux formé dans la masse de l'élément optique 20.

Ainsi le pinceau lumineux est formé par la totalité des rayons lumineux émis par la source lumineuse 14 associée qui atteignent la face de collecte 22 associée.

La deuxième face de déviation 24 comporte une pluralité de stries parallèles orientées transversalement. La deuxième face de déviation 24 présente ainsi un profil vertical en dents de scie asymétriques. Les stries présentent toutes un profil d'apparence identique.

Chaque strie comporte ainsi une première facette 34 orientée en direction de l'axe "O" qui s'étend dans un plan longitudinal transversal parallèle au pinceau lumineux et une deuxième facette opposée 36 qui s'étend dans un plan transversal qui est incliné par rapport à la direction longitudinale de manière que les rayons lumineux formant le pinceau lumineux n'atteignent que les deuxièmes facettes opposées.

La totalité des rayons lumineux formant le pinceau lumineux est ainsi déviée par les deuxièmes facettes opposées 36 de manière à former un unique faisceau intermédiaire parallèle associé à la source lumineuse 14 qui est incliné en direction de l'axe optique "O" par rapport à la direction longitudinale selon un axe optique associé "C", "D".

Les éléments optiques 20A, 20B forment ainsi des moyens pour former un premier et un deuxième faisceaux intermédiaires parallèles qui sont issus respectivement de la première et de la deuxième sources lumineuses 14A, 14B.

Les axes optiques "C", "D" des premier et deuxième faisceaux intermédiaires forment un même angle avec l'axe optique "O" du dispositif mais dans un sens opposé.

De plus, les axes optiques "C" et "D" sont sécants avec l'axe optique "O" en un unique point de croisement.

Le dispositif lumineux 12 comporte aussi un premier écran transversal de sortie 38 qui est agencé longitudinalement à distance et en avant des éléments optiques 20A, 20B. Le premier écran de sortie 38 présente une forme de disque coaxial à l'axe optique "O".

Le premier écran de sortie 38 est réalisé en un matériau transparent ayant un indice de réfraction différent de l'air. Le premier écran de sortie 38 est par exemple réalisé dans le même matériau que les éléments optiques 20A, 20B.

Le premier écran de sortie 38 comporte une face transversale verticale arrière 40 et une face verticale transversale avant de réfraction 42.

Le premier écran de sortie 38 est plus particulièrement agencé en interposition sur le trajet des faisceaux lumineux intermédiaires de manière que les faisceaux intermédiaires émis par les sources lumineuses soient susceptibles de se croiser au niveau de la face avant de réfraction 42 en tenant compte de la déviation par réfraction des faisceaux intermédiaires lors de leur passage à travers la face arrière 40.

Les deux faisceaux intermédiaires éclairent ainsi une surface commune de sortie de la face avant de réfraction 42, en d'autres termes, la face avant de réfraction 42 est agencée au confluent des deux faisceaux intermédiaires. Dans les exemples représentés aux figures, chaque faisceau lumineux intermédiaire est susceptible d'éclairer la totalité de la surface commune de sortie mais uniquement la surface commune sortie .

La face verticale arrière 40 est plane tandis que la face verticale avant 42 comporte des stries parallèles transversales ayant un profil vertical en dents de scie symétriques. Les stries présentent toutes un profil identique. Ces stries sont en fait assimilables à des prismes à deux facettes.

Chaque strie est ainsi délimitée verticalement par une première facette 44A inclinée et par une deuxième facette 44B inclinée. La deuxième face arrière 42 comporte ainsi une alternance de premières facettes 44A et de deuxièmes facettes 44B.

Les premières facettes 44A s'étendent dans un plan transversal incliné par rapport à la direction longitudinale de manière à être orientées vers le bas.

Les deuxièmes facettes 44B s'étendent dans un plan transversal incliné par rapport à la direction longitudinale de manière à être orientées vers le haut.

Les premières facettes 44A sont ainsi toutes parallèles entre elles et les deuxièmes facettes 44B sont toutes parallèles entre elles. De plus, l'angle d'inclinaison des premières facettes 44A par rapport à la direction longitudinale est le même que celui des deuxièmes facettes 44B mais dans un sens opposé.

L'angle d'inclinaison des premières et des deuxièmes facettes 44A, 44B dépend de l'indice de réfraction du matériau constituant le premier écran de sortie 38 et de l'angle d'incidence du faisceau lumineux intermédiaire émis par chacune des sources lumineuses 14A, 14B.

Les premières facettes 44A sont plus particulièrement inclinées de manière à réfracter le premier faisceau intermédiaire pour former le premier faisceau longitudinal de signalisation à travers la face arrière de réfraction 42.

Les deuxièmes facettes 44B sont inclinées de manière à réfracter le deuxième faisceau lumineux pour former le deuxième faisceau longitudinal de signalisation à travers la face arrière de réfraction 42.

Avantageusement, les premières facettes 44A, respectivement les deuxièmes facettes 44B, sont agencées parallèlement au deuxième faisceau lumineux intermédiaire, respectivement au premier faisceau lumineux intermédiaire, incident.

Les premières facettes 44A et les deuxièmes facettes 44b ont une largeur verticale très faibles, par exemple de l'ordre de 0,3 mm, de manière qu'un observateur situé longitudinalement en avant du dispositif de signalisation 12, par exemple à une distance de 1 mètre, ait la sensation que le faisceau lumineux de signalisation sortant par la face de réfraction 42 est émis de manière homogène sur toute la surface de la face de réfraction 42, alors qu'en fait, le premier faisceau lumineux de signalisation est émis par les premières facettes 44A de la surface commune et le deuxième faisceau de signalisation est émis par les deuxième facettes 44B de la surface commune de sortie.

Le faisceau de signalisation ainsi obtenu à la sortie du premier écran de sortie 38 est un faisceau de rayons lumineux parallèles qui n'est pas adapté à la ou aux fonctions à réaliser.

A cet effet, le dispositif lumineux de signalisation 12 comporte aussi un deuxième écran 46 transversal vertical de dispersion qui est agencé longitudinalement à distance et en avant du premier écran de sortie 38. Le deuxième écran 46 présente une forme similaire et des dimensions identiques à celles du premier écran de sortie 38.

Ainsi, le deuxième écran 46 présente la forme d'un disque comportant une face transversale verticale arrière 48 plane et une face transversale verticale avant 50.

Le deuxième écran 46 est réalisé en un matériau transparent présentant un indice de réfraction différent de celui de l'air, par exemple le même matériau que les éléments optiques 20.

La face avant 50 est conformée de manière à répartir l'orientation des rayons lumineux d'un faisceau lumineux parallèle entrant par sa face avant de manière à former un faisceau lumineux de signalisation qui soit conforme aux normes en vigueur. Dans l'exemple représenté à la figure 1 , la face avant 50 présente un aspect gaufré de manière qu'une partie des rayons lumineux divergent par rapport à l'axe optique "O" tandis qu'une autre partie des rayons lumineux reste sensiblement parallèle à l'axe optique "O".

Avantageusement, comme représenté aux figures 1 et 2, les éléments optiques 20A, 20B, le premier écran de sortie 38 et le deuxième écran 46 sont réalisés venus de matière. A cet effet, le dispositif lumineux de signalisation 12 comporte deux traverses 52 coudées qui sont agencées verticalement de part et d'autre des composants venus de matière du dispositif 12 de manière à lier mécaniquement lesdits composants les uns aux autres, et qui sont réalisées venus de matière avec lesdits composants.

Ainsi, chaque traverse 52 comporte un premier tronçon d'extrémité avant d'orientation axiale 54 qui est fixé par une extrémité libre avant à la tranche du deuxième écran 46 et par une extrémité arrière à la tranche du premier écran de sortie 38. Un deuxième tronçon d'extrémité arrière 56 s'étend dans un plan vertical de manière inclinée par rapport à la direction longitudinale depuis l'extrémité arrière du premier tronçon axial 54. Ce deuxième tronçon incliné 56 est fixé à la tranche de l'élément optique 20. Ainsi, les traverses 52 n'interfèrent pas avec les faisceaux lumineux intermédiaires ni avec le faisceau lumineux de signalisation.

Une patte axiale 58 s'étend vers l'arrière depuis l'extrémité arrière libre de chaque tronçon incliné 56. Les pattes axiales 58 sont destinées à fixer le dispositif 12 à la carte à circuits imprimés 18 qui porte les sources lumineuses 14A, 14B, par exemple par emboîtement élastique des pattes dans un orifice de forme complémentaire de la carte à circuits imprimés 18.

Dans un premier mode normal de fonctionnement du dispositif lumineux de signalisation 12, l'unité électronique de commande active alternativement l'une ou l'autre des sources lumineuses 14A, 14B à son intensité lumineuse normale, par exemple la première source lumineuse 14A de couleur rouge afin d'obtenir un faisceau lumineux de freinage pour la fonction "feu de stop".

Le cône lumineux produit par la première source lumineuse 14A activée est transformé en un unique pinceau lumineux d'axe "A" à l'intérieur de l'élément optique 20A associé. Puis, le pinceau lumineux est dévié en sortant par les deuxièmes facettes 36 de la face de déviation 24 pour former le premier faisceau intermédiaire incliné d'axe "C".

Lorsque le premier faisceau intermédiaire atteint la face arrière 40 du premier écran de sortie 38, il est légèrement dévié une première fois par réfraction. Puis, le premier faisceau intermédiaire atteint uniquement les premières facettes 44A la surface commune de sortie de la face avant de réfraction 42 du premier écran de sortie 38. En effet, les deuxièmes facettes 44B sont orientées parallèlement au premier faisceau intermédiaire.

Le premier faisceau intermédiaire émerge du premier écran de sortie 38 en étant dévié par réfraction par les premières facettes 44A pour former le premier faisceau lumineux de signalisation d'axe optique "O". Le premier faisceau lumineux de signalisation ne comporte alors que des rayons lumineux parallèles entre eux qui ne sont pas adaptés à la fonction "feu de stop".

Le premier faisceau lumineux de signalisation traverse alors le deuxième écran 46. Etant donné qu'il pénètre dans le deuxième écran 46 de manière orthogonal à sa face arrière 48, le premier faisceau lumineux de signalisation n'est sensiblement pas dévié par réfraction.

Enfin, en traversant la face avant 50 du deuxième écran 46, l'orientation des rayons lumineux formant le premier faisceau lumineux de freinage est répartie de manière à obtenir un faisceau lumineux conforme aux normes en vigueur.

Le fonctionnement du dispositif 12 en mode normal pour la deuxième source lumineuse 14B est analogue. Le deuxième faisceau intermédiaire est ainsi dévié uniquement par les deuxièmes facettes 44B de la face de déviation 42 du premier écran de sortie 38. On obtient ainsi le deuxième faisceau lumineux de direction de couleur ambré pour réaliser la fonction "indicateur de direction".

Dans un deuxième mode de fonctionnement en freinage d'urgence du dispositif de signalisation 12, les deux sources lumineuses 14A, 14B sont activées simultanément de manière à obtenir un premier faisceau de signalisation réalisant la fonction "feu de stop" mais ayant une intensité lumineuse supérieure au premier faisceau lumineux de freinage obtenu lors du mode de fonctionnement normal.

Ainsi le premier faisceau intermédiaire et le deuxième faisceau intermédiaire éclairent simultanément la surface commune de sortie de la face de réfraction 42 du premier écran de sortie 38 de manière à former conjointement l'unique faisceau de signalisation de freinage. Le faisceau de signalisation qui émerge du premier écran de sortie 38 comporte ainsi des rayons lumineux de couleur rouge qui sont émis par les premières facettes 44A, et des rayons lumineux de couleur ambrée qui sont émis par les deuxièmes facettes 44B.

Du fait de la très faible largeur des premières et deuxièmes facettes 44A, 44B, un oeil humain perçoit un faisceau de signalisation de couleur intermédiaire entre le rouge et l'ambré.

Selon les normes en vigueur pour la fonction "feu de stop", la couleur perçue par un oeil humain du faisceau de freinage doit être comprise dans une plage admissible de longueurs d'ondes comprenant la longueur d'onde de la couleur rouge de manière que le faisceau lumineux de freinage apparaisse, pour un oeil humain, sensiblement de la même couleur que le faisceau lumineux de freinage de couleur rouge.

Afin d'ajuster la longueur d'onde perçue du faisceau lumineux de signalisation de freinage d'urgence, l'intensité de la deuxième source lumineuse 14B est susceptible d'être diminuée par l'unité électronique de commande par rapport à son intensité lumineuse normale de manière que lorsque les deux sources lumineuses 14A, 14B sont allumées simultanément le faisceau lumineux de signalisation de freinage d'urgence ait une longueur d'onde comprise dans la plage admissible, selon les normes en vigueur.

Le faisceau lumineux de freinage d'urgence est ainsi plus intense que le faisceau lumineux de freinage normal tout en conservant une couleur admise par les normes.

Selon une variante non représentée de l'invention, la première source lumineuse et la deuxième source lumineuse sont identiques, c'est-à-dire qu'elles émettent des rayons lumineux de même longueur d'onde. La deuxième source lumineuse n'est alors utilisée que pour former le faisceau lumineux de freinage d'urgence conjointement avec la première source lumineuse, et/ou pour suppléer la première source lumineuse pour former le faisceau lumineux de freinage normal en cas de dysfonctionnement de la première source lumineuse. Ainsi le premier et le deuxième faisceaux lumineux de signalisation remplissent la même fonction.

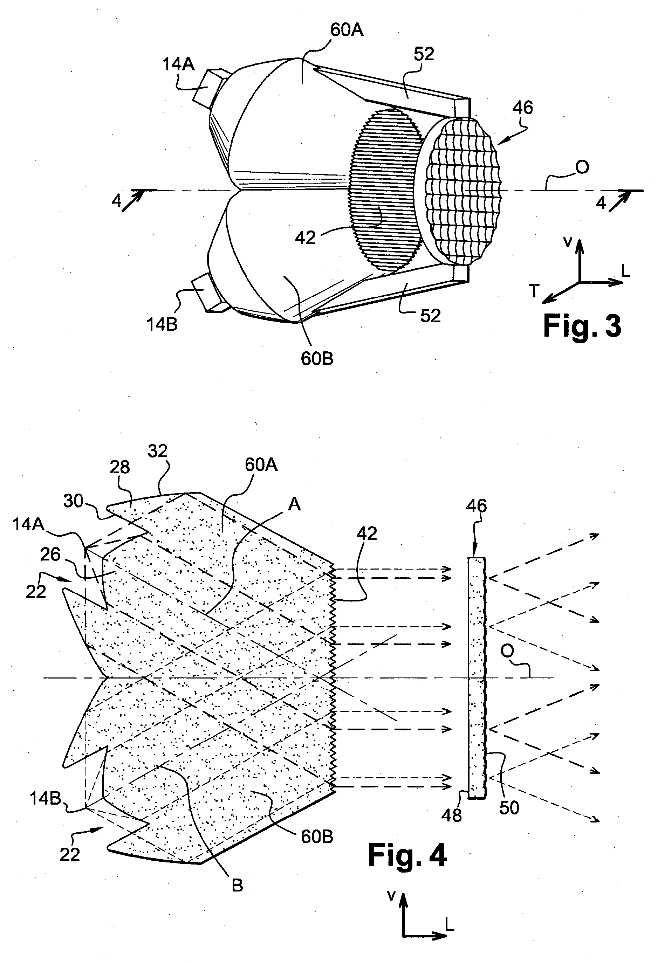

On a représenté aux figures 3 et 4 un deuxième mode de réalisation du dispositif lumineux de signalisation 12.

Dans ce deuxième mode de réalisation, les deux sources lumineuses 14A, 14B sont agencées de manière à émettre les cônes lumineux vers l'avant selon des axes principaux respectivement coaxiaux aux axes optiques inclinés "C" et "D" des faisceaux lumineux intermédiaires.

Le dispositif de signalisation 12 comporte deux guides de lumière 60A, 60B dont chacun est associé à une source lumineuse 14A, 14B. Les guides de lumières 60A, 60B sont réalisés en un matériau transparent présentant un indice de réfraction supérieur à celui de l'air ambiant.

Les guides de lumière 60A, 60B sont réalisés venus de matière en une pièce avec le premier écran de sortie 38.

Les deux guides de lumières présentent une apparence identique globalement cylindrique respectivement d'axe incliné "A" et d'axe incliné "B".

Chaque guide de lumière 60A, 60B comporte une face de collecte 22 associé d'extrémité arrière qui est agencée en vis-à-vis de la source lumineuse 14A, 14B associée. Chaque face de collecte 22 présente une forme similaire à celle des faces de collecte 22 des éléments optiques 20A, 20B du premier mode de réalisation dans le but de réaliser une fonction analogue.

A cet effet, la face de collecte 22 comporte donc une zone centrale convexe 26 et une nervure circulaire 28. Ainsi, les rayons lumineux émis par les sources lumineuses 14A, 14B sont parallélisés de manière à former directement les premier et deuxième faisceaux lumineux intermédiaire constitués de rayons lumineux parallèles.

Le tronçon d'extrémité avant du premier guide 60A fusionne avec le tronçon d'extrémité avant du deuxième guide 60B de manière à former un "V" pointant longitudinalement vers l'avant. L'extrémité avant unique et commune des deux guides de lumière 60A, 60B forme ainsi le premier écran de sortie 38 qui comporte ainsi une unique face de réfraction 42 verticale transversale qui présente la même forme striée et réalise la même fonction que la face de réfraction du premier écran de sortie 38 du premier mode de réalisation.

Chaque faisceau intermédiaire est ainsi guidé jusqu'à la face de réfraction 42 par l'intermédiaire du guide de lumière 60A, 60B associé.

Le dispositif de signalisation 12 comporte aussi un écran de dispersion 46 qui est agencé de la même manière que dans le premier mode de réalisation et qui est relié aux guides de lumières 60A, 60B par l'intermédiaire de deux traverses 52 longitudinales.

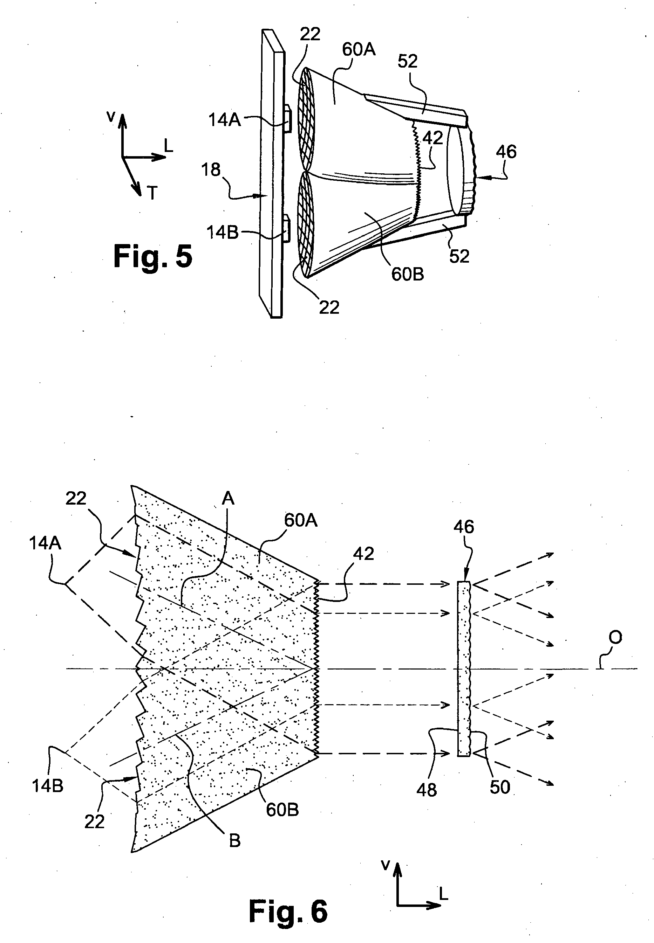

Selon un troisième mode de réalisation de l'invention qui est représenté aux figures 5 et 6, le dispositif de signalisation 12 comporte deux guides de lumière 60A, 60B similaires à ceux du deuxième mode de réalisation.

Cependant, les deux sources lumineuses 14A, 14B sont agencées, comme dans le premier mode de réalisation, dans un même plan transversal vertical de manière à émettre un cône de lumière d'axe principal longitudinal "A", "B".

La face de collecte 22 des guides de lumières 60A, 60B est conformée de manière à modifier l'orientation des rayons lumineux incidents émis par la source lumineuse 14 associée pour former le faisceau lumineux intermédiaire associé.

Ainsi, la face de collecte 22 est discrétisée en plusieurs facettes 36 de forme paraboloïde qui sont jointes entre elles par des facettes orientées parallèlement aux rayons incidents. Les facettes paraboloïdes 36 sont conformées de manière que les rayons entrants soient réfractés parallèlement à l'axe "C", "D" du faisceau intermédiaire associé. La face de collecte 22 réalise ainsi une fonction identique à celle de l'élément optique 20 du premier mode de réalisation.

Selon une variante non représentée de l'invention qui est applicable à tous les modes de réalisation précédemment décrits, la fonction de dispersion de la face arrière de l'écran de dispersion est effectuée par des formes adaptées qui sont réalisées directement sur les premières facettes 44A et les deuxièmes facettes 44B de la face de réfraction 42 du premier écran de sortie 38.

Selon une autre variante non représentée de l'invention qui est applicable au trois modes de réalisation décrits précédemment, le dispositif lumineux de signalisation comporte une troisième source lumineuse qui est susceptible de former un troisième faisceau lumineux longitudinal de signalisation à travers la surface commune de sortie de la face de réfraction du premier écran de sortie. A cet effet, la face de réfraction comporte une pluralité de troisièmes facettes qui forment une pluralité de trièdres avec les premières et les deuxièmes facettes. Le dispositif de signalisation présente ainsi une triple symétrie par rapport à trois plans sécants au niveau de l'axe optique "O" et formant des angles de 60° les uns par rapport aux autres.

Le dispositif lumineux de signalisation 12 réalisé selon les enseignements de l'invention permet de réaliser deux faisceaux lumineux de signalisation à travers une même surface de sortie 42. Ceci permet notamment de diminuer l'aire des surfaces de sortie des dispositifs d'éclairage et de signalisation d'un véhicule. En outre, le résultat obtenu participe à l'originalité du véhicule automobile.

Par ailleurs, le dispositif lumineux de signalisation 12 réalisé selon les enseignements de l'invention permet avantageusement d'obtenir un faisceau lumineux de signalisation de forte intensité, par exemple pour les freinages d'urgence, sans pour autant augmenter l'intensité de chaque diode au-delà de son intensité lumineuse normale.

La description a été faite en référence à des faisceaux de signalisation de freinage et de direction, mais on comprendra que l'invention est adaptable à tout autre type de faisceau de signalisation pour véhicule automobile.

## Revendications

1. Dispositif lumineux de signalisation (12) pour un véhicule automobile comportant au moins une première source lumineuse (14A) et une deuxième source lumineuse (14B), notamment susceptibles d'être activées en alternance ou ensemble, et dont chacune est susceptible de former un faisceau lumineux de signalisation dirigé vers l'avant, qui comporte des moyens (20, 22, 36) pour former un premier et un deuxième faisceaux intermédiaires qui sont issus respectivement de la première et de la deuxième sources lumineuses (14A, 14B) et qui sont dirigés en direction d'une surface commune de sortie d'une face transversale de réfraction (42) comportant une suite de prismes dont chaque première face (44A) réfracte le premier faisceau intermédiaire pour former un premier faisceau de signalisation, et chaque seconde face (44B) réfracte le second faisceau intermédiaire pour former un second faisceau de signalisation,
**caractérisé en ce qu'**il comporte un deuxième écran transversal de dispersion (46) qui est agencé en avant de la face de réfraction (42) et qui est conformé de manière à modifier la photométrie du faisceau lumineux de signalisation.

2. Dispositif lumineux de signalisation (12) pour un véhicule automobile, selon la revendication précédente, comportant au moins une première source lumineuse arrière (14A) et une deuxième source lumineuse arrière (14B) qui sont notamment susceptibles d'être activées en alternance et dont chacune est susceptible de former un faisceau lumineux , notamment longitudinal, de signalisation dirigé vers l'avant,
**caractérisé en ce qu'**il comporte des moyens (20, 22, 36) pour former un premier et un deuxième faisceaux intermédiaires, notamment parallèles, qui sont issus respectivement de la première et de la deuxième sources lumineuses (14A, 14B) et qui sont inclinés par rapport à la direction longitudinale en direction d'une surface commune de sortie d'une face transversale de réfraction (42) comportant une alternance de premières facettes (44A) et de deuxièmes facettes (44B),
les premières facettes (44A) étant inclinées de manière à réfracter le premier faisceau intermédiaire pour former le premier faisceau longitudinal de signalisation à travers la surface commune de sortie (42),
et les deuxièmes facettes (44B) étant inclinées de manière à réfracter le deuxième faisceau lumineux pour former le deuxième faisceau longitudinal de signalisation à travers la surface commune de sortie (42).

3. Dispositif (12) selon l'une des revendications précédentes, **caractérisé en ce que** chaque faisceau lumineux intermédiaire est formé par réfraction des rayons lumineux à travers un élément optique (20, 22, 36) comportant une face arrière de collecte (22) agencée en vis-à-vis de la source lumineuse associée (14).

4. Dispositif (12) selon la revendication précédente, **caractérisé en ce que** la source lumineuse (14A, 14B) émet des rayons lumineux selon une direction principale longitudinale (A, B) dirigée vers l'avant et **en ce que** l'élément optique (20) comporte une pluralité de facettes (36) qui interceptent la totalité des rayons lumineux qui traversent la face de collecte (22) pour former le faisceau lumineux intermédiaire associé.

5. Dispositif (12) selon l'une des revendications précédentes, **caractérisé en ce que** la face de réfraction (42) est portée par un premier écran transversal de sortie (38) qui est interposé au confluent des faisceaux intermédiaires.

6. Dispositif (12) selon la revendication précédente, **caractérisé en ce que** la face de réfraction (42) est formée par la face avant du premier écran de sortie (38).

7. Dispositif (12) selon la revendication précédente, **caractérisé en ce que** chaque faisceau intermédiaire est guidé jusqu'à la face de réfraction (42) par l'intermédiaire d'un guide de lumière (60A, 60B) associé qui est réalisé venu de matière avec le premier écran de sortie (38).

8. Dispositif (12) selon la revendication 1, **caractérisé en ce que** le deuxième écran de dispersion (46) est réalisé venu de matière avec le premier écran de sortie (38).

9. Dispositif (12) selon l'une quelconque des revendications précédentes, **caractérisé en ce que** les sources lumineuses (14A, 14B) sont formées par des diodes électroluminescentes.

10. Dispositif (12) selon la revendication précédente, **caractérisé en ce que** les diodes (14A, 14B) sont agencées sur une carte commune (18), de manière à émettre des rayons lumineux selon une direction principale longitudinale (A, B).

11. Dispositif (12) selon l'une des revendications précédentes, **caractérisé en ce que** les deux sources lumineuses (14A, 14B) sont susceptibles d'être activées simultanément pour augmenter l'intensité du premier faisceau lumineux de signalisation.

12. Dispositif (12) selon l'une des revendications précédentes, **caractérisé en ce qu'**au moins une source lumineuse (14A, 14B) comporte des moyens pour faire varier son intensité lumineuse.

13. Dispositif (12) selon l'une des revendications précédentes, **caractérisé en ce que** chaque source lumineuse (14A, 14B) émet des rayons lumineux d'une longueur d'onde différente de l'autre source lumineuse.

14. Dispositif (12) selon la revendication précédente **caractérisé en ce que** l'intensité de la deuxième source lumineuse (14B) est susceptible d'être commandée de manière que lorsque les deux sources lumineuses (14A, 14B) sont allumées simultanément, le faisceau lumineux de signalisation apparaisse sensiblement de la même couleur que le premier faisceau lumineux de signalisation.

## Patentansprüche

1. Lichtsignalgebungsvorrichtung (12) für ein Kraftfahrzeug, mit wenigstens einer ersten Lichtquelle (14A) und einer zweiten Lichtquelle (14B), die insbesondere abwechselnd oder gemeinsam aktivierbar sind und die jeweils ein nach vorne gerichtetes Signallichtbündel zu bilden vermögen, die Mittel (20, 22, 36) zum Bilden eines ersten und eines zweiten intermediären Lichtbündels umfasst, das von der ersten bzw. der zweiten Lichtquelle (14A, 14B) stammt und in Richtung einer gemeinsamen Austrittsfläche einer quer verlaufenden lichtbrechenden Seite (42) gelenkt wird, die eine Reihe Prismen aufweist, deren jeweils erste Seite (44A) das erste intermediäre Lichtbündel bricht, um ein erstes Signallichtbündel zu bilden, und deren jeweils zweite Seite (44B) das zweite intermediäre Lichtbündel bricht, um ein zweites Signallichtbündel zu bilden,
**dadurch gekennzeichnet, dass** sie einen zweiten quer verlaufenden lichtstreuenden Schirm (46) umfasst, der vor der lichtbrechenden Seite (42) angeordnet und solchermaßen ausgebildet ist, dass die Photometrie des Signallichtbündels verändert wird.

2. Lichtsignalgebungsvorrichtung (12) für ein Kraftfahrzeug nach dem vorhergehenden Anspruch, mit wenigstens einer ersten hinteren Lichtquelle (14A) und einer zweiten hinteren Lichtquelle (14B), die insbesondere abwechselnd aktivierbar sind und die jeweils ein nach vorne gerichtetes, insbesondere längs verlaufendes Signallichtbündel zu bilden vermögen,
**dadurch gekennzeichnet, dass** sie Mittel (20, 22, 36) zum Bilden eines ersten und eines zweiten intermediären, insbesondere parallelen Lichtbündels umfasst, das von der ersten bzw. der zweiten Lichtquelle (14A, 14B) stammt und in Richtung einer gemeinsamen Austrittsfläche einer quer verlaufenden lichtbrechenden Seite (42) bezüglich der Längsrichtung geneigt ist, die abwechselnd erste Facetten (44A) und zweite Facetten (44B) aufweist,
wobei die ersten Facetten (44A) solchermaßen geneigt sind, dass das erste intermediäre Lichtbündel gebrochen wird, um das erste längs verlaufende Signallichtbündel durch die gemeinsame Austrittsfläche (42) hindurch zu bilden,
und wobei die zweiten Facetten (44B) solchermaßen geneigt sind, dass das zweite intermediäre Lichtbündel gebrochen wird, um das zweite längs verlaufende Signallichtbündel durch die gemeinsame Austrittsfläche (42) hindurch zu bilden.

3. Vorrichtung (12) nach einem der vorhergehenden Ansprüche,
**dadurch gekennzeichnet, dass** jedes intermediäre Lichtbündel durch Brechen der Lichtstrahlen durch ein optisches Element (20, 22, 36) hindurch gebildet wird, das eine lichtsammelnde Rückseite (22) aufweist, die gegenüber der zugeordneten Lichtquelle (14) angeordnet ist.

4. Vorrichtung (12) nach dem vorhergehenden Anspruch,
**dadurch gekennzeichnet, dass** die Lichtquelle (14A, 14B) Lichtstrahlen in einer nach vorne gerichteten Hauptlängsrichtung (A, B) emittiert und dass das optische Element (20) eine Vielzahl von Facetten (36) aufweist, die die gesamten Lichtstrahlen, die die lichtsammelnde Seite (22) durchqueren, abfangen, um das zugeordnete intermediäre Lichtbündel zu bilden.

5. Vorrichtung (12) nach einem der vorhergehenden Ansprüche,
**dadurch gekennzeichnet, dass** die lichtbrechende Seite (42) von einem ersten quer verlaufenden Austrittsschirm (38) gehalten wird, der dort eingefügt ist, wo die intermediären Lichtbündel zusammentreffen.

6. Vorrichtung (12) nach dem vorhergehenden Anspruch,
**dadurch gekennzeichnet, dass** die lichtbrechende Seite (42) durch die Vorderseite des ersten Austrittsschirms (38) gebildet ist.

7. Vorrichtung (12) nach dem vorhergehenden Anspruch,
**dadurch gekennzeichnet, dass** jedes intermediäre Lichtbündel bis zur lichtbrechenden Seite (42) mittels eines zugeordneten Lichtleiters (60A 60B) geleitet wird, der mit dem ersten Austrittsschirm (38) einstückig ausgebildet ist.

8. Vorrichtung (12) nach Anspruch 1,
**dadurch gekennzeichnet, dass** der zweite lichtstreuende Schirm (46) mit dem ersten Austrittsschirm (38) einstückig ausgebildet ist.

9. Vorrichtung (12) nach einem der vorhergehenden Ansprüche,
**dadurch gekennzeichnet, dass** die Lichtquellen (14A, 14B) durch Leuchtdioden gebildet sind.

10. Vorrichtung (12) nach dem vorhergehenden Anspruch,
**dadurch gekennzeichnet, dass** die Dioden (14A, 14B) auf einer gemeinsamen Leiterpatte (18) solchermaßen angeordnet sind, dass Lichtstrahlen in eine Hauptlängsrichtung (A, B) emittiert werden.

11. Vorrichtung (12) nach einem der vorhergehenden Ansprüche,
**dadurch gekennzeichnet, dass** die beiden Lichtquellen (14A, 14B) gemeinsam aktivierbar sind, um die Lichtstärke des ersten Signallichtbündels zu erhöhen.

12. Vorrichtung (12) nach einem der vorhergehenden Ansprüche,
**dadurch gekennzeichnet, dass** wenigstens eine Lichtquelle (14A, 14B) Mittel zum Verändern ihrer Lichtstärke aufweist.

13. Vorrichtung (12) nach einem der vorhergehenden Ansprüche,
**dadurch gekennzeichnet, dass** jede Lichtquelle (14A, 14B) Lichtstrahlen mit einer von der anderen Lichtquelle unterschiedlichen Wellenlänge emittiert.

14. Vorrichtung (12) nach dem vorhergehenden Anspruch,
**dadurch gekennzeichnet, dass** die Lichtstärke der zweiten Lichtquelle (14B) solchermaßen gesteuert zu werden vermag, dass bei zwei gleichzeitig eingeschalteten Lichtquellen (14A, 14B) das Signallichtbündel im Wesentlichen die gleiche Farbe wie das erste Signallichtbündel hat.

## Claims

1. Signalling light device (12) for a motor vehicle comprising at least a first source of light (14A) and a second source of light (14B), which in particular can be activated alternately or together, and each of which can form a signalling light beam which faces forwards, and comprises means (20, 22, 36) for forming a first and a second intermediate beam which are obtained respectively from the first and second sources of light (14A, 14B) and face in the direction of a common output surface of a transverse refraction face (42) comprising a set of prisms, each first face (44A) of which refracts the first intermediate beam, in order to form a first signalling beam, and each second face (44B) refracts the second intermediate beam in order to form a second signalling beam,
**characterised in that** it comprises a second transverse dispersion screen (46) which is arranged at the front of the refraction face (42), and is formed such as to modify the photometry of the signalling light beam.

2. Signalling light device (12) for a motor vehicle according to the preceding claim, comprising at least a first rear source of light (14A) and a second rear source of light (14B), which in particular can be activated alternately, and each of which can form a signalling light beam, which in particular is longitudinal and faces forwards, **characterised in that** it comprises means (20, 22, 36) for forming a first and a second intermediate beam, which in particular are parallel, and are obtained respectively from the first and the second sources of light (14A, 14B) and are inclined relative to the longitudinal direction, in the direction of a common output surface of a transverse refraction face (42) comprising alternation of first facets (44A) and second facets (44B), the first facets (44A) being inclined such as to refract the first intermediate beam in order to form the first longitudinal signalling beam by means of the common output surface (42) and
the second facets (44B) being inclined such as to refract the second light beam in order to form the second longitudinal signalling beam by means of the common output surface (42).

3. Device (12) according to one of the preceding claims, **characterised in that** each intermediate light beam is formed by refraction of the rays of light by means of an optical element (20, 22, 36) comprising a rear collection face (22) which is arranged opposite the associated source of light (14).

4. Device (12) according to the preceding claim, **characterised in that** the source of light (14A, 14B) emits rays of light according to a main longitudinal direction (A, B) which faces forwards, and **in that** the optical element (20) comprises a plurality of facets (36) which intercept all the rays of light which pass through the collection face (22) in order to form the associated intermediate light beam.

5. Device (12) according to one of the preceding claims, **characterised in that** the refraction face (42) is supported by a first transverse output screen (38) which is interposed at the confluence of the intermediate beams.

6. Device (12) according to the preceding claim, **characterised in that** the refraction face (42) is formed by the front face of the first output screen (38).

7. Device (12) according to the preceding claim, **characterised in that** each intermediate beam is guided as far as the refraction face (42) by means of an associated light guide (60A, 60B) which is produced integrally with the first output screen (38).

8. Device (12) according to claim 1, **characterised in that** the second dispersion screen (46) is produced integrally with the first output screen (38).

9. Device (12) according to any one of the preceding claims, **characterised in that** the sources of light (14A, 14B) are formed by light-emitting diodes.

10. Device (12) according to the preceding claim, **characterised in that** the diodes (14A, 14B) are arranged on a common board (18), such as to emit rays of light according to a main longitudinal direction (A, B).

11. Device (12) according to one of the preceding claims, **characterised in that** the two sources of light (14A, 14B) can be activated simultaneously in order to increase the intensity of the first signalling light beam.

12. Device (12) according to one of the preceding claims, **characterised in that** at least one source of light (14A, 14B) comprises means for making its light intensity vary.

13. Device (12) according to one of the preceding claims, **characterised in that** each source of light (14A, 14B) emits rays of light with a wave length different from the other source of light.

14. Device (12) according to the preceding claim, **characterised in that** the intensity of the second source of light (14B) can be controlled such that, when the two sources of light (14A, 14B) are lit simultaneously, the signalling light beam appears to be substantially the same colour as the first signalling light beam.
